# EUROPÄISCHE PATENTSCHRIFT

(11) **EP 1 826 040 B1**
(45) Veröffentlichungstag und Bekanntmachung des Hinweises auf die Patenterteilung: **15.04.2009**
(21) Anmeldenummer: 06290366.1
(22) Anmeldetag: 27.02.2006
(51) Int. Cl.: B60H 1/00

(54) **Klappenanordnung, insbesondere gekoppelte Frischluft-/Umluftklappen eines Kraftfahrzeugs**
Arrangement of damper doors, in particular coupled fresh air and recirculated air inlet doors of a vehicle
Arrangement de clapets d'air, en particulier clapets d'air extérieur et recirculé accouplés d'un véhicule

(43) Veröffentlichungstag der Anmeldung: 29.08.2007
(73) Patentinhaber: Behr France Rouffach SAS, 68250 Rouffach (FR)
(72) Erfinder: Fuentes, Nicolas, 68124 Logelbach (FR)
(74) Vertreter: Grauel, Andreas

(56) Entgegenhaltungen:
- EP-A- 1 138 532
- EP-A- 1 486 361
- DE-A1- 19 936 688
- US-A- 3 847 210
- PATENT ABSTRACTS OF JAPAN Bd. 008, Nr. 240 (M-336), 6. November 1984 (1984-11-06) & JP 59 119128 A (NIPPON DENSO KK), 10. Juli 1984 (1984-07-10)
- PATENT ABSTRACTS OF JAPAN Bd. 013, Nr. 512 (M-893), 16. November 1989 (1989-11-16) -& JP 01 204817 A (NISSAN MOTOR CO LTD), 17. August 1989 (1989-08-17)

## Beschreibung

Die Erfindung betrifft eine Klappenanordnung, insbesondere gekoppelte Frischluft-/Umluftklappen eines Kraftfahrzeugs, gemäß dem Oberbegriff des Anspruchs 1.

Aus der DE 199 36 688 A1 ist eine Gebläseeinheit für eine Klimaanlage eines Kraftfahrzeugs bekannt, mit einer Frischluft-Einlassklappe und einer Umluft-Einlassklappe, die über eine Verbindungsmechanik miteinander verbunden sind. Die Verbindungsmechanik weist einen antreibenden verschwenkbaren Hebel auf, der dazu dient, ein Drehmoment auf die Frischluft-Einlassklappe zu übertragen. Ferner weist die Verbindungsmechanik einen angetriebenen verschwenkbaren Hebel auf, der dazu dient, ein Drehmoment auf die Umluft-Einlassklappe zu übertragen. Außerdem weist die Verbindungsmechanik ein Verbindungsglied, gebildet durch eine starre, mit ihren Enden verschwenkbar an den Hebeln angebrachte Verbindungsstange, auf, welches eine Verbindung zwischen dem antreibenden verschwenkbaren Hebel und dem angetriebenen verschwenkbaren Hebel bildet, um das Drehmoment des antreibenden verschwenkbaren Hebels auf den angetriebenen verschwenkbaren Hebel zu übertragen, sowie einen Führungsblock, der mit einer entsprechenden T-förmigen Kulisse versehen ist. Die beiden Klappen werden durch die Verbindungsmechanik betätigt und in ihren jeweiligen Stellungen durch die Verbindungsmechanik festgehalten. Eine derartige Klappenanordnung ist relativ kompliziert aufgebaut und lässt daher noch Wünsche offen.

US 3 847 210 offenbart eine Klappenanordnung nach dem Oberbegriff des Anspruchs 1.

Es ist Aufgabe der Erfindung, eine verbesserte Klappenanordnung zur Verfügung zu stellen.

Diese Aufgabe wird gelöst durch eine Klappenanordnung, insbesondere gekoppelte Frischluft-/Umluftklappen eines Kraftfahrzeugs, mit den Merkmalen des Anspruchs 1. Vorteilhafte Ausgestaltungen sind Gegenstand der Unteransprüche.

Erfindungsgemäß ist eine Klappenanordnung, insbesondere für gekoppelte Frischluft-/Umluftklappen eines Kraftfahrzeugs, vorgesehen, die mindestens zwei in Abhängigkeit voneinander betätigbare Klappen und ein zwischen den Klappen oder deren Achsen angeordnetes Verbindungsglied aufweist, wobei die Klappen und/oder deren Achsen eine relativ zum Verbindungsglied veränderbare Kontaktposition aufweisen. Durch ein sich relativ zu den Klappen in seiner Position veränderbares Verbindungsglied kann eine einfache und raumsparende Koppelung der Klappen erfolgen, bei der nur wenige Bauteile erforderlich sind. Insbesondere lassen sich auf einfache Weise gegenläufige Bewegungsabläufe der Klappen erzeugen, was durch eine starre Koppelung nicht ohne weiteres möglich ist. Als Getriebe zur Bewegungsübertragung sind Zahngetriebe vorgesehen.

Das Verbindungsglied wird durch eine Stange gebildet, die zumindest bereichsweise mit Zähnen versehen ist. Die Bewegungsabläufe eines entsprechenden Getriebes sind sehr einfach, die Belastungen vorhersehbar und daher kann das Getriebe ohne großen Aufwand ausgelegt werden. Zudem stellt ein Vorsehen von Zähnen eine exakte Positionierung sicher, die bei einem Reibgetriebe nicht gewährleistet werden kann.

An jeder Klappe oder deren Achse ist ein Zahnrad oder zumindest ein Zahnsegment, welches sich mindestens über den erforderlichen Schwenkwinkel der Klappe erstreckt, ausgebildet oder angebracht. Dieses Zahnrad bzw. Zahnsegment kämmt mit den an dem Verbindungsglied vorgesehenen Zähnen.

Bevorzugt ist das Verbindungsglied in seiner Längsrichtung beweglich positioniert. Die Verschiebbarkeit in Längsrichtung ermöglicht eine einfache Anbringung, bspw. an einem Gehäuse. Ein Verklemmen während der Verschiebung des Verbindungsgliedes kann auf einfache Weise sicher ausgeschlossen werden.

Die Schwenkachsen der Klappen sind vorzugsweise parallel zueinander angeordnet, wodurch sich die Bewegungsabläufe stark vereinfachen. Dabei verläuft vorzugsweise die Verbindungsebene der Schwenkachsen parallel zur Bewegungsrichtung des Verbindungsglieds.

Ein besonders einfacher Antrieb kann dadurch vorgesehen werden, wenn das Verbindungsglied mit Hilfe einer Zahngetriebeverbindung in direkter Verbindung mit einem Aktuator steht. Hierbei ist vorzugsweise die Abtriebswelle des Aktuators mit einem Zahnrad ausgebildet oder ein Zahnrad ist auf der Abtriebswelle vorgesehen. Dieses Zahnrad kämmt direkt mit einer am Verbindungsglied vorgesehenen Verzahnung, wobei diese sowohl ausschließlich für dieses Zahnrad ausgebildet sein kann als auch mit einem Zahnrad oder Zahnsegment für eine der Klappen geteilt werden kann.

Steht das Verbindungsglied mit Hilfe einer Zahngetriebeverbindung in indirekter Verbindung mit einem Aktuator, so ist vorzugsweise an einer Achse oder an einem Zahnrad einer der Klappen ein Hebelarm ausgebildet, der Teil einer anderen Getriebeverbindung ist. Diese Getriebeverbindung kann einen Bowdenzug umfassen, mit Hilfe dessen Bewegungen über große Entfernungen und/oder komplizierte Wege auf einfache Weise übertragen werden können. Beliebige andere Getriebeverbindungen sind jedoch auch möglich.

Das Verbindungsglied ist vorzugsweise ein Kunststoff-Spritzgussteil, welches kostengünstig herstellbar ist. Entsprechendes gilt für die Zahnräder und Klappen.

Im Folgenden wird die Erfindung anhand von mehreren Ausführungsbeispielen im Einzelnen erläutert. In der Zeichnung zeigen:
- Fig. 1: eine schematische Darstellung einer Gebläseeinheit mit einer erfindungsgemäßen Klappenanordnung gemäß dem ersten Ausführungsbeispiel,
- Fig. 2: eine schematische Darstellung eines zweiten Ausführungsbeispiels,
- Fig. 3: eine schematische Darstellung eines dritten Ausführungsbeispiels, und
- Fig. 4: eine schematische Darstellung eines vierten Ausführungsbeispiels.

Eine Gebläseeinheit 1 einer Kraftfahrzeug-Klimaanlage weist ein in einem Gebläsegehäuse 2 angeordnetes Gebläse (nicht dargestellt) auf, das - geregelt über zwei im Gebläsegehäuse 2 symmetrisch zueinander angeordnete Klappen 3 - Umluft aus dem Fahrzeuginnenraum und/oder Frischluft aus der Umgebung des Kraftfahrzeugs ansaugt und diese über das anschließende Luftkanalsystem dem Fahrzeuginnenraum nach Durchströmen der Kraftfahrzeug-Klimaanlage temperiert zuführt.

Die gesamte Gebläseeinheit 1 ist vorliegend im Wesentlichen spiegelsymmetrisch zur Mittelebene des Kraftfahrzeugs ausgebildet, so dass zwei Umluftkanäle und zwei Frischluftkanäle vorgesehen sind, wobei je ein Umluftund ein Frischluftkanal von einer der Klappen 3 ganz oder teilweise freigegeben bzw. verschlossen wird. Die Schwenkachsen der Klappen 3 verlaufen parallel zueinander. Dabei bewegen sich die Klappen 3 einander entsprechend, so dass der Öffnungs- bzw. Schließgrad der beiden Klappen 3 jeweils gleich ist.

Um die beiden Klappen 3 miteinander zu koppeln, ist ein Verbindungsglied 4 in Form einer an ihren Endbereichen auf unterschiedlichen Seiten mit Zähnen (nicht näher in der Zeichnung dargestellt) versehenen Stange 5 zwischen den beiden Klappen 3 angeordnet. An der Drehachse jeder der Klappen 3 ist jeweils ein Zahnrad 6 ausgebildet, das mit den Zähnen der Stange 5 in Eingriff steht. Das Zahnrad 6 kann direkt mit der Achse der Klappen 3 spritzgegossen sein. Alternativ kann es auch bspw. auf die Achse aufgesteckt sein.

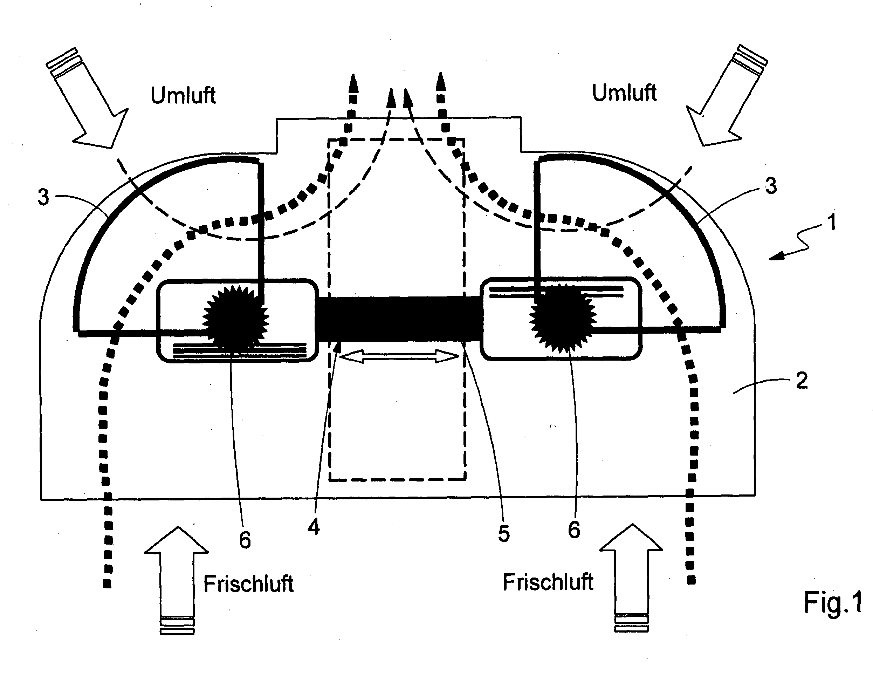

Die Stange 5 ist in ihren mit Zähnen versehenen Endbereichen versetzt ausgebildet, d.h. das eine Ende ist um etwa den Durchmesser eines der Zahnräder 6 versetzt zum anderen Ende angeordnet, wie aus Fig. 1 ersichtlich.

Die versetzte Ausgestaltung hat den Vorteil, dass sich die Ausrichtung der Stange 5 während eines Verschiebens in Längsrichtung nicht ändert, so dass die Stange 5 auf relativ einfache Weise geführt werden kann (lineare Bewegung in Richtung der Längsachse der Stange 5).

Wird die Stange 5, bspw. mit Hilfe eines weiteren Zahnrades (nicht dargestellt), das an der Abtriebswelle eines Aktuators (nicht dargestellt) angebracht ist, und einer weiteren Reihe von Zähnen, vorliegend im mittleren Bereich, verschoben, so bewegen sich die Klappen 3 - je nach Verschiebungsrichtung der Stange 5 - aufeinander zu (oder voneinander weg) und öffnen so die beiden Frischluftkanäle (oder die beiden Umluftkanäle) und verschließen entsprechend die Umluftkanäle (Frischluftkanäle).

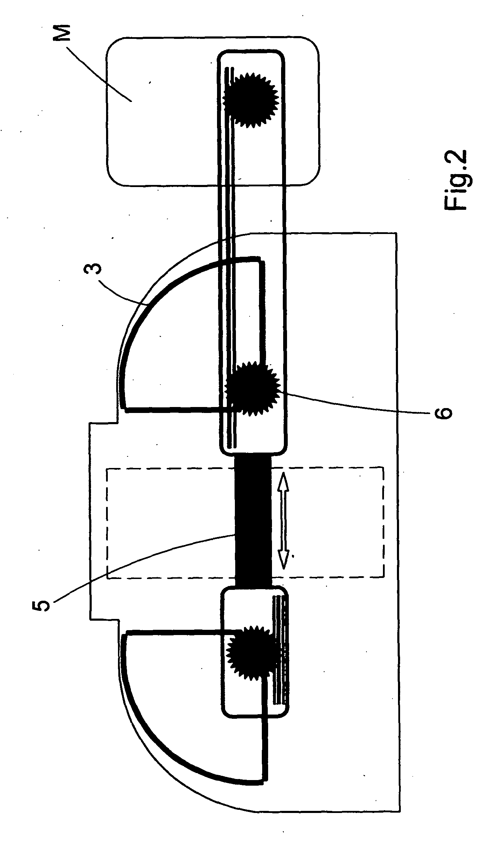

Gemäß dem in Fig. 2 dargestellten Ausführungsbeispiel, das soweit nachfolgend nicht näher beschrieben dem ersten Ausführungsbeispiel entspricht, ist der Aktuator M seitlich versetzt angeordnet. Ferner ist ein mit Zähnen versehenes Ende der Stange 5 verlängert ausgebildet, so dass neben dem Zahnrad 6 der einen Klappe 3 auch das an der Abtriebswelle des Aktuators M angebrachte Zahnrad mit den Zähnen in Eingriff steht, wodurch die Stange 5 in ihrer Längsrichtung in Abhängigkeit der Betätigung des Aktuators M verschiebbar ist. Vorliegend haben alle drei Zahnräder den gleichen Durchmesser und die gleiche Zähnezahl, was Vorteile in Hinblick auf die Herstellung, insbesondere von getrennt hergestellten Zahnrädern hat, da Gleichteile verwendet werden können. Die Durchmesser können jedoch auch unterschiedlich ausgebildet sein.

Die Funktion der Stange 5 in Verbindung mit den Klappen 3 ist die Gleiche, wie die der Stange 5 des ersten Ausführungsbeispiels, so dass hierauf nicht näher eingegangen wird.

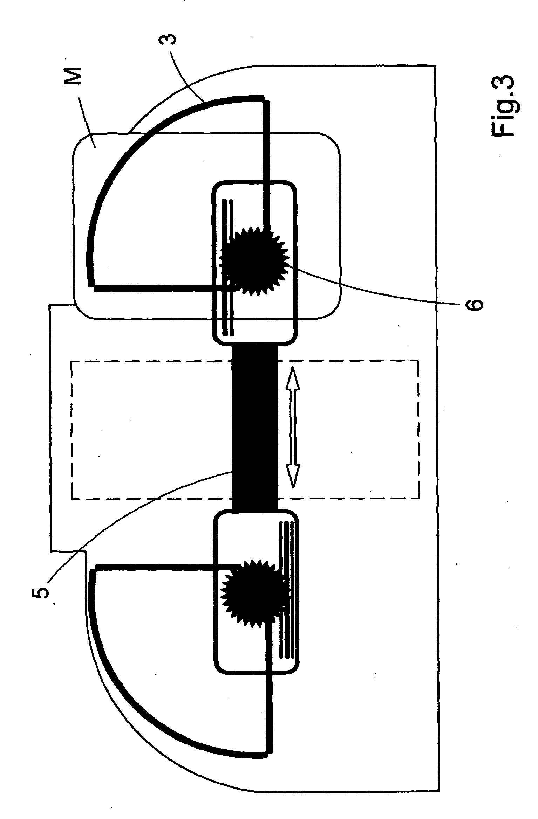

Gemäß dem in Fig. 3 dargestellten Ausführungsbeispiel wird die eine, in der Figur rechts dargestellte Klappe 3 direkt vom Aktuator M betätigt. Die Achse der Klappe 3 ist jedoch wiederum mit einem Zahnrad 6 versehen, welches in Eingriff mit Zähnen der Stange 5 steht, welche entsprechend der Stange 5 des ersten Ausführungsbeispiels ausgebildet ist, so dass die zweite Klappe 3 über die Stange 5 ebenfalls vom Aktuator M betätigt wird. Im Unterschied zum ersten Ausführungsbeispiel ist lediglich die Achse der einen Klappe 3 länger ausgebildet oder direkt mit der Welle des Aktuators M verbunden, so dass der zentral vorgesehene Akturator des ersten Ausführungsbeispiels entfallen kann.

Gemäß einer nicht in der Zeichnung dargestellten Variante kämmt ein Zahnrad der Abtriebswelle des Aktuators mit einem Zahnsegment, das an einer der Klappen oder deren Achsen ausgebildet bzw. angebracht ist. Die Bewegungsübertragung auf die andere Klappe, d.h. die Koppelung, erfolgt wiederum über die Stange, die - abgesehen von den gemäß dem ersten Ausführungsbeispiel direkt für den Aktuator an ihr ausgebildeten Zähnen - der des ersten Ausführungsbeispiels entspricht.

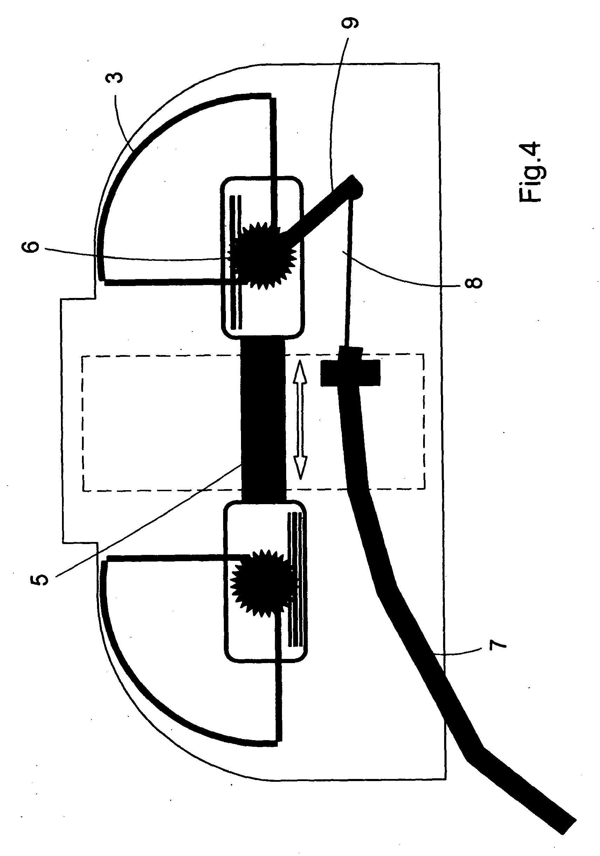

Fig. 4 zeigt ein viertes Ausführungsbeispiel einer gekoppelten Klappenanordnung, wobei wiederum eine Stange vorgesehen ist, die - abgesehen von den gemäß dem ersten Ausführungsbeispiel direkt für den Aktuator an ihr ausgebildeten Zähnen - der des ersten Ausführungsbeispiels entspricht, so dass auf die gekoppelte Bewegung der Klappen 3 nicht näher eingegangen wird.

Die Übertragung der Stellbewegung auf eine der Klappen 3 erfolgt mit Hilfe eines von einem nicht näher dargestellten Aktuator betätigten Bowdenzugs 7, dessen zumindest im Endbereich biegesteif ausgebildeten Seele 8 mit einem an der Achse angebrachten Hebelarm 9 verbunden ist. Wird die Seele 8 eingezogen, so wird der Hebelarm 9 bewegt und mit ihm das Zahnrad 6 gedreht und somit die Stange 5 verschoben, so dass sich die Stellung beider Klappen 3 gleichzeitig verändert. Bei einem Herausschieben der biegesteifen Seele 9 erfolgt eine Bewegung der Klappen 3 in umgekehrter Richtung.

Ist die Seele 8 nicht biegesteif in ihrem Endbereich ausgebildet, so kann gegen eine Federkraft gearbeitet werden, welche die Rückstellkraft aufbringt, so dass die Seele 8 ausschließlich auf Zug belastet wird.

## Patentansprüche

1. Klappenanordnung, insbesondere gekoppelte Frischluft-/Umluftklappen eines Kraftfahrzeugs, aufweisend mindestens zwei in Abhängigkeit voneinander betätigbare Klappen (3), und ein zwischen den Klappen (3) oder deren Achsen angeordnetes Verbindungsglied (4), wobei die Klappen (3) und/oder deren Schwenkachsen eine relativ zum Verbindungsglied (4) veränderbare Kontaktposition aufweisen, das Verbindungsglied (4) durch eine Stange (5) mit zumindest bereichsweise ausgebildeten Zähnen gebildet ist, an jeder Klappe (3) oder deren Schwenkachse ein Zahnrad (6) oder ein Zahnsegment ausgebildet oder angebracht ist und das mit Zähnen versehene Verbindungsglied (4) in Eingriff mit dem mit Zähnen versehenen Bereich der beiden Klappen (3) oder deren Schwenkachsen ist, **dadurch gekennzeichnet, dass**, die Stange (5) an einem ihrer Endbereiche auf einer Seite und am anderen ihrer Endbereiche auf der dieser gegenüberliegenden Seite mit Zähnen versehen ist.

2. Klappenanordnung nach Anspruch 1, **dadurch gekennzeichnet, dass** das Verbindungsglied (4) in seiner Längsrichtung beweglich positioniert ist.

3. Klappenanordnung nach einem der vorhergehenden Ansprüche, **dadurch gekennzeichnet, dass** die Schwenkachsen der Klappen (3) parallel zueinander angeordnet sind.

4. Klappenanordnung nach Anspruch 3, **dadurch gekennzeichnet, dass** die Verbindungsebene der Schwenkachsen parallel zur Bewegungsrichtung des Verbindungsglieds (4) verläuft.

5. Klappenanordnung nach einem der vorhergehenden Ansprüche, **dadurch gekennzeichnet, dass** das Verbindungsglied (4) mit Hilfe einer Zahngetriebeverbindung in direkter Verbindung mit einem Aktuator steht.

6. Klappenanordnung nach einem der Ansprüche 1 bis 4, **dadurch gekennzeichnet, dass** das Verbindungsglied (4) mit Hilfe einer Zahngetriebeverbindung in indirekter Verbindung mit einem Aktuator steht, wobei an einer Schwenkachse oder an einem Zahnrad ein Hebelarm ausgebildet ist.

7. Klappenanordnung nach Anspruch 6, **dadurch gekennzeichnet, dass** der Hebelarm (9) über einen Bowdenzug (7) betätigbar ist.

## Claims

1. Arrangement of shutters, in particular fresh-air/recirculated-air shutters of a motor vehicle, comprising at least two shutters (3) that can be actuated in a mutually dependent manner, and a connection element (4) arranged between the shutters (3) or their axles, such that the shutters (3) and/or their pivot axles have a contact position that can be varied relative to the connection element (4), the said connection element (4) consisting of a rod (5) with teeth at least on some parts of it, a toothed wheel (6) or toothed segment being formed on or attached to each shutter (3) or its pivot axle, and the connection element (4) with its teeth engaging with the parts of the two shutters (3) or their pivot axles provided with teeth, **characterised in that** the rod (5) is provided with teeth on one of its end areas on one side and on the other of its end areas on the opposite side.

2. Shutter arrangement according to Claim 1, **characterised in that** the connection element (4) is positioned so that it can move in its longitudinal direction.

3. Shutter arrangement according to either of the preceding claims, **characterised in that** the pivot axles of the shutters (3) are arranged parallel to one another.

4. Shutter arrangement according to Claim 3, **characterised in that** the plane connecting the pivot axles extends parallel to the movement direction of the connection element (4).

5. Shutter arrangement according to any of the preceding claims, **characterised in that**.

6. Shutter arrangement according to any of Claims 1 to 4, **characterised in that** the connection element (4) is indirectly connected to an actuator by means of gearing connection, and a lever arm is formed on one pivot axle or on one gearwheel.

7. Shutter arrangement according to Claim 6, **characterised in that** the lever arm (9) can be actuated by means of a Bowden cable (7).

## Revendications

1. Agencement de volets, en particulier de volets d'air frais / d'air de circulation, couplés, d'un véhicule automobile, présentant au moins deux volets (3) pouvant être actionnés indépendamment l'un de l'autre et un élément de liaison (4) disposé entre les volets (3) ou leurs axes, où les volets (3) et / ou leurs axes de pivotement présentent une position de contact modifiable par rapport à l'élément de liaison (4), où l'élément de liaison (4) est formé par une barre (5) comprenant des dents configurées au moins par zones, une roue dentée (6) ou un segment denté étant configuré(e) ou fixée(e) sur chaque volet (3) ou sur son axe de pivotement, et l'élément de liaison (4) doté de dents est en prise avec la zone des deux volets (3) ou de leurs axes de pivotement, ladite zone étant dotée de dents,
**caractérisé en ce que** la barre (5), au niveau de l'une de ses zones d'extrémité, sur un côté, et, au niveau de l'autre de ses zones d'extrémité, sur le côté opposé à l'autre côté, est dotée de dents.

2. Agencement de volets selon la revendication 1,
**caractérisé en ce que** l'élément de liaison (4) est positionné en étant mobile dans sa direction longitudinale.

3. Agencement de volets selon l'une ou l'autre des revendications précédentes, **caractérisé en ce que** les axes de pivotement des volets (3) sont disposés en étant parallèles entre eux.

4. Agencement de volets selon la revendication 3, **caractérisé en ce que** le plan de liaison des axes de pivotement s'étend parallèlement à la direction de mouvement de l'élément de liaison (4).

5. Agencement de volets selon l'une quelconque des revendications précédentes, **caractérisé en ce que** l'élément de liaison (4), à l'aide d'un accouplement par engrenage denté, est en liaison directe avec un actionneur.

6. Agencement de volets selon l'une quelconque des revendications 1 à 4, **caractérisé en ce que** l'élément de liaison (4), à l'aide d'un accouplement par engrenage denté, est en liaison indirecte avec un actionneur, où un bras de levier est configuré sur un axe de pivotement ou sur une roue dentée.

7. Agencement de volets selon la revendication 6, **caractérisé en ce que** le bras de levier (9) peut être actionné par un câble Bowden (7).
